# EUROPÄISCHE PATENTSCHRIFT

(11) **EP 3 100 855 B1**
(45) Veröffentlichungstag und Bekanntmachung des Hinweises auf die Patenterteilung: **15.08.2018**
(21) Anmeldenummer: 15170541.5
(22) Anmeldetag: 03.06.2015
(51) Int. Cl.: B32B 21/08, B32B 27/06, E04F 15/00, H01F 7/00, B32B 9/02, B32B 9/04

(54) **BELAG MIT EINER TRÄGERPLATTE UND HERSTELLUNGSVERFAHREN**
COVERING INCLUDING A SUPPORT PLATE AND MANUFACTURING METHOD
REVETEMENT DOTE D'UNE PLAQUE DE SUPPORT ET PROCEDE DE FABRICATION

(43) Veröffentlichungstag der Anmeldung: 07.12.2016
(73) Patentinhaber: Weroform GmbH, 74523 Schwäbisch Hall-Sulzdorf (DE)
(72) Erfinder: Becker, Silvan, 74523 Schwäbisch Hall-Sulzdorf (DE)
(74) Vertreter: Wunderlich & Heim Patentanwälte Partnerschaftsgesellschaft mbB

(56) Entgegenhaltungen:
- DE-A1- 19 959 681
- US-A1- 2008 210 463

## Beschreibung

Die Erfindung betrifft einen Belag mit einer Trägerplatte, die Metallpartikel aufweist, welche magnetisch oder magnetisierbar sind, gemäß Anspruch 1 und ein Verfahren zum Herstellen des Belags mit einer Trägerplatte gemäß Anspruch 9.

Aus der DE 199 59 681 A1 ist bekannt, dass eine Einarbeitung von teilchenförmigen magnetischen oder magnetisierbaren Werkstoffen in Bodenbeläge eine magnetische Wechselwirkung mit einem entsprechend präparierten Untergrund ermöglichen soll. Weiterhin ist vorgeschlagen, einen Belag, bestehend aus einer Nutz- oder Deckschicht und mindestens einer weiteren, unter der Nutzschicht angeordneten Schicht, vorzusehen, wobei die untere Schicht mindestens einen teilchenförmigen magnetischen Werkstoff und ein Bindemittel enthält. So soll ein materialschonender und somit auch kostengünstiger Einsatz des Werkstoffs ermöglicht werden.

Aus der DE 42 34 792 A1 ist bekannt, in einem Teppichboden beziehungsweise dessen unteren Trägerschicht magnetisch anziehende beziehungsweise anziehbare Teilchen zu integrieren. Hierbei handelt es sich insbesondere um pulverförmiges Material, wobei darauf hingewiesen wird, dass eine unvorteilhafte Korngrößenwahl zu einer Beeinträchtigung der Festigkeitseigenschaften des Belags führen kann. Auf dem Boden ist hierbei eine zu dem pulverförmigen Material korrespondierende Folie, Vlies oder Gewebematerial vorgeschlagen, welches mit dem pulverförmigen Material magnetisch wechselwirken soll.

Die US 2008/0210463 offenbart eine Folie oder flachen Körper, welcher sowohl einen Anteil an Plastik, natürlichen Fasern sowie einen Anteil an Metallpulver aufweist. Das Metallpulver weist eine Partikelgröße von 0,01 µm bis 100 µm auf.

Der Erfindung liegt die **Aufgabe** zugrunde, einen Belag mit einer Trägerplatte, welche hohen qualitativen Erfordernissen gerecht wird sowie ein wirtschaftliches Verfahren zum Herstellen des Belags mit einer Trägerplatte anzugeben.

Die Aufgabe wird nach der Erfindung einerseits durch die Bereitstellung eines Belags mit einer Trägerplatte mit den Merkmalen des Anspruchs 1 und andererseits durch ein Verfahren mit den Merkmalen des Anspruchs 9 gelöst. Bevorzugte Ausführungsformen sind in den jeweils abhängigen Ansprüchen angegeben.

Der erfindungsgemäße Belag mit einer Trägerplatte ist dadurch gekennzeichnet, dass die Trägerplatte aus einer Materialmischung gebildet ist, welche mindestens ein Polymer, natürliche Fasern und längliche Metallspäne aufweist, und dass die Materialmischung in einem fließfähigen Zustand zu einer Plattenform gepresst ist, wobei der plattenförmige Belag frei von vorstehenden Metallspänen gebildet ist.

Weiterhin ist das erfindungsgemäße Verfahren zum Herstellen eines Belags mit einer Trägerplatte dadurch gekennzeichnet, dass die Trägerplatte aus einer Materialmischung gebildet wird, welche mindestens ein Polymer, natürliche Fasern und längliche Metallspäne aufweist, und dass die Materialmischung in einem fließfähigen Zustand zu einer Plattenform gepresst wird, wobei der plattenförmige Belag frei von vorstehenden Metallspänen gebildet wird.

Ein Grundgedanke der Erfindung besteht darin, einen Belag, welcher insbesondere ein Boden-, Wand- oder Deckenbelag ist, mit einer Trägerplatte vorzusehen, welche Materialanteile aufweist, die zum einen aufgrund ihrer räumlichen Ausdehnung zur Festigkeit der Trägerplatte beitragen und zum anderen magnetische Wechselwirkung ermöglichen.

Ein weiterer Grundgedanke der Erfindung besteht darin, eine Trägerplatte für einen Belag aus einer Materialmischung zu bilden, wobei zumindest Anteile der Materialmischung, insbesondere ein Polymer und/oder natürliche Fasern zwischenzeitlich in ihrer Festigkeit verändert werden, was ein Pressen der Materialmischung ermöglicht, um so einen ebenen Belag zu schaffen, welcher frei von vorstehenden Bestandteilen gebildet wird.

Der Belag nach der Erfindung kann einerseits als einschichtiger Belag andererseits auch als mehrschichtiges Belagsystem verstanden werden.

Weiterhin sind nach der Erfindung unter Metallpartikeln, insbesondere unter länglichen Metallspänen magnetische oder magnetisierbare Metalle, beliebiger chemischer Komplexität wie beispielsweise Ferrite, als auch jede andere, magnetisierbare oder magnetische Substanz zu verstehen.

Das Polymer der Materialmischung, aus der die Trägerplatte gebildet ist, kann jeden natürlich gewonnenen sowie synthetisch hergestellten Kunststoff oder eine Mischung beziehungsweise Block- oder Copolymere derselbigen umfassen. Nach der Erfindung ist ein Polymer jede Substanz, die aus mindestens zwei gleichen oder unterschiedlichen chemischen Untereinheiten gebildet ist. Vorzugsweise handelt es sich bei den verwendeten Polymeren um Thermoplasten. Weiterhin kann das Polymer in Form seiner Untereinheiten, insbesondere seiner Monomeren, Dimeren und/oder Trimeren verwendet werden, und in dieser Form weiteren Materialien der Trägerplatte zugeführt und mit diesen vermengt werden, wobei das Polymer erst in der Materialmischung mit den weiteren Bestandteilen der Trägerplatte aus seinen Untereinheiten durch beispielsweise Polymerisation gebildet wird. Nach der Erfindung umfasst das Polymer sowohl sortenreine Homo-Polymere, Polymermischungen als auch Block- und-Co-Polymere.

Natürliche Fasern nach der Erfindung können insbesondere natürlich vorkommende Fasern sowie Fasern sein, welche vollständig oder teilweise aus natürlichen Materialien gebildet sind. Die vorausgehend beschriebenen Fasern können durch Verarbeitung eines oder mehrerer natürlich Materialien produzierbar sein. Hierbei können neben den natürlichen Materialien auch synthetische Materialien anteilig verwendet werden, um die natürlichen Fasern zu bilden. Weiterhin können die natürlichen Fasern auch synthetische Faseranteile aufweisen.

Nach einer Weiterbildung der Erfindung kann es vorteilhaft sein, dass die Trägerplatte mit einer Dekoroberfläche versehen ist. Die Trägerplatte kann, die Festigkeit des Belags gewährleisten. Durch das Auftragen oder Befestigen der Dekoroberfläche kann die Materialmischung der Trägerplatte unabhängig von ästhetischen Gesichtspunkten bezüglich seiner physikalischen Eigenschaften an die jeweiligen Erfordernisse angepasst werden. Somit kann das anteilige Vorsehen der Bestandteile der Materialmischung beispielsweise die Abriebfestigkeit, Flexibilität, Steifigkeit, Temperatur- und UV-Beständigkeit begünstigen. Die Dekoroberfläche kann eine natürliche Nutzschicht, etwa aus Holz, Bambus, Linoleum etc. sein.

Eine vorteilhafte Ausführungsform der Erfindung besteht darin, dass die Dekoroberfläche eine Folie, insbesondere eine Fotofolie ist. Folien wie auch andere flexible Filme können in besonders wirtschaftlich in kontinuierlicher Weise auf der Oberfläche einer Trägerplatte aufgebracht werden. Hierbei kann die Folie mit einem Dekormuster bedruckt sein, welches die darunter befindliche Materialmischung der Trägerplatte blickdicht abdeckt. Weiterhin kann es vorteilhaft sein, dass die Dekoroberfläche als eines Drucks direkt auf die Trägerplatte aufgedruckt und mit dieser zu einer Einheit verbunden ist. Die Oberfläche der Trägerplatte kann so ausgebildet sein, dass sie bereits die angestrebte Haptik des Belags aufweist und um eine Farbgebung, insbesondere mittels eines Bedruckens ergänzt ist, um dem optischen und haptischen Gesamteindruck eines beliebigen Materials, insbesondere einer Stein- oder Holzoberfläche, zu entsprechen.

Eine vorteilhafte Ausführung der Erfindung besteht darin, dass die Dicke der Trägerplatte 80% bis 98% der Dicke des Belags entspricht. Der Belag kann im Wesentlichen aus der Trägerplatte gebildet sein. Die vergleichsweise dünne Dekoroberfläche kann insbesondere die gewünschte Farbgebung und/oder Struktur beziehungsweise Haptik des Belags zur Verfügung stellen oder ergänzen.

Eine besonders vorteilhafte Weiterbildung der Erfindung besteht darin, dass die Trägerplatte selbsttragend ist. Aufgrund der hohen Strukturfestigkeit der gepressten Materialmischung, aus welcher die Trägerplatte gebildet ist, kann es ermöglicht sein, den Belag lediglich in einen Randbereich zu der unter dem Belag befindlichen Oberfläche, insbesondere einem Boden hin abzustützen. Im Kontaktbereich des Belags mit einem darunter befindlichen Element, insbesondere dem Untergrund oder einem Stützbereich, welcher nur bereichsweise mit einer Unterseite des Belags kontaktiert ist kann zwischen dem Belag und dem Element eine Beschichtung vorgesehen sein. Die Beschichtung kann eine magnetische Wechselwirkung mit den länglichen Metallspänen in der Trägerplatte ermöglichen. Die Beschichtung kann sowohl flächig als auch bereichsweise im Kontaktbereich der Trägerplatte mit dem darunter befindlichen Material und/oder Oberfläche, insbesondere einem Boden vorgesehen sein und beispielsweise als Anstrich, Folie oder mehrere flache Einzelelemente ausgebildet sein.

Besonders bevorzugt ist es nach der Erfindung, dass die Dicke der Trägerplatte 2 mm bis 12 mm beträgt. Die hohe Festigkeit der verpressten Materialmischung ermöglicht es, besonders filigrane Trägerplatten unter geringem Materialeinsatz bereitzustellen, was sowohl die Herstellung wirtschaftlicher und die Handhabung, insbesondere des Gewichts, erleichtert gestalten kann. Weiterhin kann die geringe Dicke der Trägerplatte dazu beitragen, dass die länglichen Metallspäne einerseits gleichmäßig in der Trägerplatte vorsehbar sind und dennoch, zumindest ein Großteil der länglichen Metallspäne, signifikant an den magnetischen Wechselwirkungen mit einem unterhalb der Trägerplatte befindlichen Material beteiligt sind. Dies ist insofern relevant, als die Magnetfeldstärke eines Magneten mit zunehmendem Abstand von diesem abnimmt und somit weiter entfernte Metallspäne weniger oder nur geringfügig zu einer magnetischen Haftwirkung des Belags an einem entsprechend vorbereiteten Untergrund beitragen können.

Eine besonders vorteilhafte Ausführung der Erfindung besteht darin, dass die Metallspäne und/oder die natürlichen Fasern eine Länge von 0,2 mm bis 5 mm aufweisen. Die längliche Form der Metallspäne sowie der natürlichen Fasern kann insbesondere durch Ineinandergreifen, Verknoten, Verweben oder sonstiges Verquicken dieser Materialien die Festigkeit der Trägerplatte positiv beeinflussen. Somit kann die Festigkeit der Trägerplatte nicht nur auf physikalische und chemische Wechselwirkung, wie beispielsweise Wasserstoffbrückenbindungen adhäsive und van der Waals-Kräfte gestützt werden, sondern zusätzlich von der makroskopischen Struktur der Einzelbestandteile der Materialmischung profitieren.

Eine besondere Verbindungsstärke zwischen den Bestandteilen der Materialmischung kann dadurch erreicht werden, dass die Metallspäne eine amorphe Oberfläche aufweisen, welche insbesondere durch eine Oxidation gebildet ist. Unregelmäßige, zerklüftete Oberflächen wie sie beispielsweise bei oxidativ behandelten Oberflächen zu finden sind, können das Verquicken, insbesondere ein Ineinandergreifen und/oder Verhaken der länglichen Metallspäne untereinander sowie zwischen den länglichen Metallspänen und den anderen Bestandteilen der Materialmischung begünstigen. Die amorphe Oberfläche kann beispielsweise auch durch Pulverbeschichtung oder jede andere zweckmäßige Oberflächenbehandlung, insbesondere korrosive Oberflächenbehandlung, bereitgestellt werden. Im Falle einer Pulverbeschichtung oder einer beliebigen anderen Oberflächenbehandlung, bei welcher Material zugeführt wird, kann es zweckmäßig sein, dass die aktive Substanz der Metallspäne insbesondere durch das Beschichtungsmaterial gebildet sind, welches auf eine darunter befindliche magnetisch neutrale Spanoberfläche aufgetragen ist.

Eine bevorzugte Weiterbildung des erfindungsgemäßen Verfahrens kann darin bestehen, dass auf Pressbändern in einem Endlosverfahren die Mischung zu der Plattenform gepresst wird. Die einzelnen Bestandteile der Materialmischung können den Pressbändern einer Vorrichtung, welche ausgebildet ist aus der Materialmischung die erfindungsgemäße Trägerplatte zu bilden, so zugeführt werden, dass die gebildete Trägerplatte eine möglichst homogene Verteilung der Mischungsbestandteile aufweist. Das Herstellen der Trägerplatten in einem Endlosverfahren kann es hierbei in besonders einfacher Weise ermöglichen, die Plattenform, insbesondere ihre Breite, entsprechend der physikalischen Eigenschaften der Trägerplatte, beispielsweise ihrer Härte oder Elastizität, anzupassen. Hierbei kann die Materialmischung zwischen den beabstandeten Pressbändern eingebracht werden, welche mittels Druck die Bestandteile der Materialmischung zusammenpressen können, wobei basierend auf dem Abstand der Pressbänder die Dicke der Trägerplatte einstellbar ist. In einem dem Verpressen nachgeordneten Zuschnitt kann die Form der Trägerplatte weiter angepasst werden.

Um eine besonders gute Festigkeit der Trägerplatte zu erreichen, kann es vorteilhaft sein, dass vor und/oder während des Verpressens Bestandteile der Materialmischung aufgeschmolzen werden, wobei ein Verbinden der Bestandteile beim Verpressen unterstützt wird. Das Aufschmelzen von Bestandteilen der Materialmischung kann die Duktilität dieser Bestandteile erhöhen, wodurch eine Verbesserung der Kompaktierbarkeit der Materialmischung mittels der Pressbänder erreicht werden kann. Durch das Aufschmelzen von Bestandteilen der Materialmischung kann ein höherer Oberflächenkontakt zwischen den Bestandteilen ermöglichen sein, was die Bindewirkung durch Wechselwirkungen zwischen den Bestandteilen verstärken kann. Nach der Erfindung kann ein Aufschmelzen von Bestandteilen der Materialmischung bereits dann gegeben sein, wenn die entsprechende Glasübergangstemperatur oder, je nach Bestandteil die vergleichbare Temperatur, bei welcher die aufzuschmelzenden Bestandteile in einer gummiartige bis zähflüssige Konsistenz vorliegen, erreicht ist.

Eine besonders zweckmäßige Weiterbildung der Erfindung kann darin bestehen, dass die natürlichen Fasern und das Polymer aus Granulat getrennt von den Metallspänen in die Vorrichtung eingebracht werden. In Form eines Granulats können die Bestandteile der Materialmischung in besonders einfacher Weise einer Vorrichtung zum Verpressen der Materialmischung zuführbar und mischbar sein. Hierbei können die einzelnen Bestandteile der Materialmischung einerseits separat als jeweils sortenreines Granulat, als Granulatmischung oder in Form eines Granulats zur Verfügung gestellt werden, welches aus einer Materialmischung gebildet ist, die eine Auswahl von Bestandteilen der Materialmischung aufweisen kann. Bei einem solchen Granulat kann jedes einzelne Granulatkorn mehrere Bestandteile der Materialmischung aufweisen. Durch das getrennte Zuführen der Metallspäne in die Vorrichtung zum Verpressen der Materialmischung zu den Trägerplatten kann es ermöglicht sein, die Verteilung der Metallspäne in der Trägerplatte zu steuern. Besonders vorteilhaft kann es hierbei sein, dass die Metallspäne den übrigen Bestandteilen der Materialmischung der Vorrichtung vor dem Verpressen so zugeführt werden, dass die Trägerplatte in verschiedenen Bereichen unterschiedliche Konzentrationen an Metallspänen aufweist. Somit kann es ermöglicht sein, die Metallspäne in der Trägerplatte insbesondere in einem Bereich flächig vorzusehen, welcher der Dicke der Trägerplatte nach einem durch den Belag zu bedeckenden Untergrund zugewandt ist. Neben einer bereits an sich relativ dünn ausgestalteten Trägerplatte von wenigen Millimetern kann das Aufkonzentrieren von Metallspänen in der Nähe einer der Oberflächen der Trägerplatte zusätzlich die Bindungsstärke des Belags mittels magnetischer Wechselwirkung an einem entsprechend vorbehandelten Untergrund verstärken sowie einen materialschonenden Einsatz von Metallspänen ermöglichen.

Besonders zweckmäßig ist es nach einer Weiterbildung der Erfindung, dass das Granulat Granulatkörner unterschiedlicher Korngröße aufweist, welche zwischen 0,2 mm und 2 mm beträgt. Die besondere Korngrößenverteilung kann neben den bereits angeführten Maßnahmen die Bildungswirkung zwischen den Bestandteilen der Materialmischung vorteilhaft begünstigen, indem beispielsweise Zwischenräume, insbesondere beim Verpressen der Materialmischung, durch kleinere Granulatkörner leichter füllbar sind. Vorzugsweise sind das Polymer und die natürlichen Fasern vorab vermengt und zu einem Granulat geformt. Dies führt zur einer erhöhten Festigkeit. Alternativ können auch die metallischen Späne bereits in das Granulat eingebunden sein. Dies ist dann besonders anwenderfreundlich.

## Patentansprüche

1. Belag mit einer Trägerplatte, wobei die Trägerplatte aus einer Materialmischung gebildet ist, welche mindestens ein Polymer und natürliche Fasern aufweist, **dadurch gekennzeichnet,**
**dass** die Materialmischung längliche Metallspäne aufweist, welche magnetisch oder magnetisierbar sind,
**dass** die länglichen Metallspäne mit unregelmäßiger, zerklüfteter Oberfläche gebildet und untereinander sowie mit den natürlichen Fasern verhakt sind und dass die Materialmischung in einem fließfähigen Zustand zu einer Plattenform gepresst ist, wobei der plattenförmige Belag frei von vorstehenden Metallspänen gebildet ist.

2. Belag mit einer Trägerplatte nach Anspruch 1,
**dadurch gekennzeichnet,**
**dass** die Trägerplatte mit einer Dekoroberfläche versehen ist.

3. Belag mit einer Trägerplatte nach Anspruch 1 oder 2,
**dadurch gekennzeichnet,**
**dass** die Dekoroberfläche eine Folie, insbesondere eine Fotofolie ist.

4. Belag mit einer Trägerplatte nach einem der Ansprüche 1 bis 3,
**dadurch gekennzeichnet,**
**dass** die Dicke der Trägerplatte 80% bis 98% der Dicke des Belags entspricht.

5. Belag mit einer Trägerplatte nach einem der Ansprüche 1 bis 4,
**dadurch gekennzeichnet,**
**dass** die Trägerplatte selbsttragend ist.

6. Belag mit einer Trägerplatte nach einem der Ansprüche 1 bis 5,
**dadurch gekennzeichnet,**
**dass** die Dicke der Trägerplatte 2 mm bis 12 mm beträgt.

7. Belag mit einer Trägerplatte nach einem der Ansprüche 1 bis 6,
**dadurch gekennzeichnet,**
**dass** die Metallspäne und/oder die natürlichen Fasern eine Länge von 0,2 mm bis 5 mm aufweisen.

8. Belag mit einer Trägerplatte nach einem der Ansprüche 1 bis 7,
**dadurch gekennzeichnet,**
**dass** die Metallspäne eine amorphe Oberfläche aufweisen, welche insbesondere durch eine Oxidation gebildet ist.

9. Verfahren zum Herstellen eines Belags mit einer Trägerplatte, wobei die Trägerplatte aus einer Materialmischung gebildet wird, welche mindestens ein Polymer und natürliche Fasern aufweist
**dadurch gekennzeichnet,**
**dass** die Materialmischung mit länglichen Metallspänen gebildet wird, die magnetisch oder magnetisierbar sind, wobei längliche Metallspäne mit einer unregelmäßigen, zerklüfteten Oberfläche verwendet werden, welche untereinander sowie mit den natürlichen Fasern verhakt werden, und
**dass** die Materialmischung in einem fließfähigen Zustand zu einer Plattenform gepresst wird, wobei der plattenförmige Belag frei von vorstehenden Metallspänen gebildet wird.

10. Verfahren zum Herstellen eines Belags mit einer Trägerplatte nach Anspruch 9,
**dadurch gekennzeichnet,**
**dass** auf Pressbänder einer Vorrichtung, welche ausgebildet ist, aus der Materialmischung die Trägerplatte zu bilden, in einem Endlosverfahren die Mischung zu der Plattenform gepresst wird.

11. Verfahren zum Herstellen eines Belags mit Trägerplatte nach einem der Ansprüche 9 oder 10,
**dadurch gekennzeichnet,**
**dass** vor und/oder während des Verpressens Bestandteile der Materialmischung aufgeschmolzen werden, wobei ein Verbinden der Bestandteile beim Verpressen unterstützt wird.

12. Verfahren nach einem der Ansprüche 9 bis 11,
**dadurch gekennzeichnet,**
**dass** die natürlichen Fasern und das Polymer als Granulat getrennt von den Metallspänen in die Vorrichtung eingebracht werden.

13. Verfahren nach Anspruch 12,
**dadurch gekennzeichnet,**
**dass** das Granulat Granulatkörner unterschiedlicher Korngröße aufweist, welche zwischen 0,2 mm und 2 mm beträgt.

## Claims

1. Covering including a support plate, the support plate being made of a material mixture comprising at least one polymer and natural fibers,
**characterized in that**
the material mixture comprises elongate metal shavings which are magnetic or magnetizable,
the elongate metal shavings are formed with irregular, jagged surfaces and interconnect with one another as well as with the natural fibers, and
the material mixture is pressed to a plate form while being in a flowable state, wherein the covering in plate form is formed free of protruding metal shavings.

2. Covering including a support plate according to claim 1,
**characterized in that**
the support plate is provided with a decorative surface.

3. Covering including a support plate according to claim 1 or 2,
**characterized in that**
the decorative surface is a film, in particular a photographic film.

4. Covering including a support plate according to anyone of claims 1 to 3,
**characterized in that**
the thickness of the support plate corresponds to 80% to 98% of the thickness of the covering.

5. Covering including a support plate according to anyone of claims 1 to 4,
**characterized in that**
the support plate is self-supporting.

6. Covering including a support plate according to anyone of claims 1 to 5,
**characterized in that**
the thickness of the support plate measures from 2 mm to 12 mm.

7. Covering including a support plate according to anyone of claims 1 to 6,
**characterized in that**
the metal shavings and/or the natural fibers have a length of 0.2 mm to 5 mm.

8. Covering including a support plate according to anyone of claims 1 to 7,
**characterized in that**
the metal shavings have an amorphous surface, which is in particular formed by an oxidation.

9. Method for producing a covering including a support plate, the support plate being formed from a material mixture comprising at least one polymer and natural fibers,
**characterized in that**
the material mixture is made with elongate metal shavings which are magnetic or magnetizable, wherein elongate metal shavings having an irregular, jagged surface are used which are able to interconnect with one another as well as with the natural fibers, and
the material mixture is pressed into plate form while being in a flowable state, wherein the covering in plate form is formed free of protruding metal shavings.

10. Method for producing a covering including a support plate according to claim 9,
**characterized in that**,
in a continuous process, the mixture is pressed into the plate form on press belts of a device which is designed to form the support plate from the material mixture.

11. Method for producing a covering including a support plate according to anyone of claims 9 or 10,
**characterized in that**
components of the material mixture are melted before and/or during the compression process, wherein a joining of the components is aided by the compression process.

12. Method according to anyone of claims 9 to 11,
**characterized in that**
the natural fibers and the polymer are introduced into the device in granulate form and apart from the metal shavings.

13. Method according to claim 12,
**characterized in that**
the granulate has granules of varying grain size measuring between 0.2 mm and 2 mm.

## Revendications

1. Revêtement avec une plaque de support, dans lequel la plaque de support est formée à partir d'un mélange de matériaux, qui présente au moins un polymère et des fibres naturelles,
**caractérisé en ce**
**que** le mélange de matériaux présente des copeaux métalliques allongés, qui sont magnétiques ou peuvent être magnétisés,
**que** les copeaux métalliques allongés sont formés avec une surface irrégulière, accidentée et sont accrochés entre eux ainsi qu'aux fibres naturelles, et
**que** le mélange de matériaux est pressé dans un état apte à l'écoulement en une forme de plaque, dans lequel le revêtement en forme de plaque est formé sans copeaux métalliques saillants.

2. Revêtement avec une plaque de support selon la revendication 1,
**caractérisée en ce**
**que** la plaque de support est pourvue d'une surface décorative.

3. Revêtement avec une plaque de support selon la revendication 1 ou 2,
**caractérisé en ce**
**que** la surface décorative est un film, en particulier un film comportant une photographie.

4. Revêtement avec une plaque de support selon l'une quelconque des revendications 1 à 3,
**caractérisé en ce**
**que** l'épaisseur de la plaque de support correspond à 80 % à 98 % de l'épaisseur du revêtement.

5. Revêtement avec une plaque de support selon l'une quelconque des revendications 1 à 4,
**caractérisé en ce**
**que** la plaque de support est autoporteuse.

6. Revêtement avec une plaque de support selon l'une quelconque des revendications 1 à 5,
**caractérisé en ce**
**que** l'épaisseur de la plaque de support va de 2 mm à 12 mm.

7. Revêtement avec une plaque de support selon l'une quelconque des revendications 1 à 6,
**caractérisé en ce**
**que** les copeaux métalliques et/ou les fibres naturelles présentent une longueur allant de 0,2 mm à 5 mm.

8. Revêtement avec une plaque de support selon l'une quelconque des revendications 1 à 7,
**caractérisé en ce**
**que** les copeaux métalliques présentent une surface amorphe, qui est formée en particulier par une oxydation.

9. Procédé servant à fabriquer un revêtement avec une plaque de support, dans lequel la plaque de support est formée à partir d'un mélange de matériaux, qui présente au moins un polymère et des fibres naturelles,
**caractérisé en ce**
**que** le mélange de matériaux est formé avec des copeaux métalliques allongés, qui sont magnétiques ou qui peuvent être magnétisés, dans lequel des copeaux métalliques allongés avec une surface irrégulière, accidentée sont utilisés, qui sont accrochés les uns aux autres ainsi qu'aux fibres naturelles, et
**que** le mélange de matériaux est pressé dans un état apte à l'écoulement en une forme de plaque, dans lequel le revêtement en forme de plaque est formé sans copeaux métalliques saillants.

10. Procédé servant à fabriquer un revêtement avec une plaque de support selon la revendication 9,
**caractérisé en ce**
**que** le mélange est pressé en la forme de plaque sur des bandes de pressage d'un dispositif, qui est réalisé pour former la plaque de support à partir du mélange de matériaux par un procédé en continu.

11. Procédé servant à fabriquer un revêtement avec une plaque de support selon l'une quelconque des revendications 9 ou 10,
caractérisé en ce
des constituants du mélange de matériaux sont fondus avant et/ou pendant la compression, un assemblage des constituants étant soutenu lors de la compression.

12. Procédé selon l'une quelconque des revendications 9 à 11,
**caractérisé en ce**
**que** les fibres naturelles et le polymère sont introduits dans le dispositif sous la forme de granulés séparément des copeaux métalliques.

13. Procédé selon la revendication 12,
**caractérisé en ce que** les granulés présentent des granules de granulométrie différente, qui est comprise entre 0,2 mm et 2 mm.
